# FASCICULE DE BREVET EUROPEEN

(11) **EP 1 917 691 B1**
(45) Date de publication et mention de la délivrance du brevet: **17.06.2009**
(21) Numéro de dépôt: 06779025.3
(22) Date de dépôt: 07.07.2006
(51) Int. Cl.: H01M 4/50, H01M 4/52

(54) **MATERIAU D'ELECTRODE POSITIVE HAUTE TENSION DE STRUCTURE SPINELLE A BASE DE NICKEL ET DE MANGANESE POUR ACCUMULATEURS AU LITHIUM**
HOCHSPANNUNGS-POSITIV-ELEKTRODENMATERIAL MIT SPINELLSTRUKTUR AUF DER BASIS VON NICKEL UND MANGAN FÜR LITHIUMZELLENBATTERIEN
HIGH-VOLTAGE POSITIVE ELECTRODE MATERIAL HAVING A SPINEL STRUCTURE BASED ON NICKEL AND MANGANESE FOR LITHIUM CELL BATTERIES

(30) Priorité: 25.08.2005 FR 0508737
(43) Date de publication de la demande: 07.05.2008
(73) Titulaire: COMMISSARIAT A L'ENERGIE ATOMIQUE, 75015 Paris (FR)
(72) Inventeur: PATOUX, Sébastien, F-38600 Fontaine (FR); LE CRAS, Frédéric, F-38470 Notre Dame de l'Osier (FR); BOURBON, Carole, F-38590 Saint Michel de Saint-Geoirs (FR); JOUANNEAU, Séverine, F-38600 Fontaine (FR)
(74) Mandataire: Vuillermoz, Bruno
(86) Numéro de dépôt international: PCT/FR2006/050686
(87) Numéro de publication internationale: WO 2007/023235

(56) Documents cités:
- EP-A- 1 093 172
- US-A- 5 631 104
- US-A- 5 759 717
- US-A- 5 783 332
- US-A1- 2001 008 730
- US-A1- 2002 192 148
- US-A1- 2004 202 938
- US-B1- 6 337 158
- KIM J-H ET AL: "COMPARATIVE STUDY OF LINI0.5MN1.5O4-DELTA AND LINI0.5MN1.5O4 CATHODES HAVING TWO CRYSTALLOGRAPHIC STRUCTURES: FD3M AND P4332" CHEMISTRY OF MATERIALS, AMERICAN CHEMICAL SOCIETY, WASHINGTON, US, vol. 16, 2004, pages 906-914, XP002346119 ISSN: 0897-4756 cité dans la demande
- XIA Y ET AL: "A 4 V LITHIUM-ION BATTERY BASED ON A 5 V LINIX-MN2 - XO4 CATHODE AND A FLAKE CU-SN MICROCOMPOSITE ANODE" ELECTROCHEMICAL AND SOLID-STATE LETTERS, IEEE SERVICE CENTER, PISCATAWAY, NJ, US, vol. 4, no. 2, février 2001 (2001-02), pages A09-A11, XP001101382 ISSN: 1099-0062
- ZHONG Q ET AL: "Synthesis and electrochemistry of LiNixMn2-xO4" JOURNAL OF THE ELECTROCHEMICAL SOCIETY, ELECTROCHEMICAL SOCIETY. MANCHESTER, NEW HAMPSHIRE, US, vol. 144, no. 1, janvier 1997 (1997-01), pages 205-213, XP002969926 ISSN: 0013-4651

## Description

### DOMAINE TECHNIQUE

La présente invention a trait à un nouveau composé de structure spinelle, de type oxyde mixte à base de Ni, Mn et Li, de formule et de paramètre de maille bien déterminés.

Un tel composé présente des propriétés remarquables en termes de stabilité et de performances électrochimiques.

Par conséquent, il est avantageusement utilisé dans des électrodes, batteries et accumulateurs au lithium.

### ETAT ANTERIEUR DE LA TECHNIQUE

Les accumulateurs au lithium sont de plus en plus utilisés comme sources d'énergie autonomes, en particulier dans les équipements portables où ils remplacent progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie massique et volumique nettement supérieures à celles proposées par les filières NiCd et NiMH.

Les composés actifs d'électrode utilisés dans ces accumulateurs commerciaux sont, pour l'électrode positive, des composés lamellaires tels que LiCoO₂, LiNiO₂ et les mixtes Li(Ni, Co, Mn, Al)O₂ ou des composés de structure spinelle de composition proche de LiMn₂O₄. L'électrode négative est généralement constituée par du carbone (graphite, coke, ...) ou éventuellement le spinelle Li₄Ti₅O₁₂ ou un métal formant un alliage avec le lithium (Sn, Si, ...). Les capacités théoriques et pratiques des composés d'électrode positive cités sont respectivement d'environ 275 mAh/g et 140 mAh/g pour les oxydes de structure lamellaire (LiCoO₂ et LiNiO₂), et de 148 mAh/g et 120 mAh/g pour le spinelle LiMn₂O₄. Dans tous les cas, une tension de fonctionnement par rapport au lithium métallique voisine de 4 Volts est obtenue. De même, le phosphate de fer lithié LiFePO₄ de structure olivine (170 mAh/a à 3,4 V vs. Li⁺/Li ; soit 580 Wh/kg) est souvent cité comme matériau d'électrode positive de choix pour certaines applications (automobile hybride, ...) et constituera vraisemblablement un des matériaux compétitifs pour la future génération d'accumulateurs au lithium.

Les spinelles, dits de "haute tension", de formulation générale LiMₓMn₂₋ₓO-_{4-δ} plus spécifiquement ceux pour lesquels M est l'élément nickel, présentent des propriétés électrochimiques d'oxydoréduction à des potentiels très élevés (au-delà de 4,5 V vs. Li⁺/Li).

Ainsi, dans le premier document relatant le comportement de ces matériaux, FR 2 738 673, on a montré que le composé LiNi^{II}₀.₅Mn^{IV}_{1.5}O₄ de structure spinelle est électrochimiquement actif de manière réversible à un potentiel d'environ 4,7-4,75 V vs. Li⁺/Li. Sa capacité spécifique théorique est de 146,7 mAh/g, et sa densité d'énergie théorique vis-à-vis du lithium métallique avoisine par conséquent 700 Wh/kg (692,4 Wh/kg exactement pour un potentiel moyen de 4,72 V). De la même façon, LiMn₂O₄ (Mn⁴⁺/Mn³⁺) est électrochimiquement actif de manière réversible à un potentiel moyen d'environ 4,1 V vs. Li⁺/Li (148,2 mAh/g et 607,7 Wh/kg, en théorie).

A titre de comparaison, le composé LiCoO₂ possède une densité d'énergie massique pratique maximum de 540 Wh/kg de matière active.

De plus, eu égard aux nombreux travaux effectués sur le spinelle LiMn₂O₄, il est bien connu que ce composé d'électrode positive présente de très bonnes performances électrochimiques sous fortes densités de courant, en raison de son réseau structural tridimensionnel (interconnections de canaux dans les trois dimensions de l'espace). Cela laisse présager un bon comportement en puissance pour d'autres matériaux de même structure, notamment ceux à base de lithium et de manganèse, tels les composés LiNiₓMn₂₋ₓO₄ (0 ≤ x ≤ 0,5) par exemple.

Le matériau générique "LiNi_{0.5}Mn₁.₅O₄", dont les performances électrochimiques semblent actuellement les plus intéressantes, possède en réalité une composition sensiblement différente, dans laquelle une partie du manganèse se trouve à l'état d'oxydation +3, en raison de l'existence de lacune cationique et/ou de la présence d'une faible quantité d'impureté de type LiₓNi₁₋ₓO apparaissant lors de la synthèse.

En effet, il a été montré dans l'article de J.H. Kim *et al.* [J.H ; Kim, S.T. Myung, C.S. Yoon, S.G. Kang and Y.K. Sun, Chem. Mater. 2004, 16, 906-914 : comparative Study of LiNi_{0.5}Mn_{1.5}O_{4-δ} and LiNi_{0.5}Mn_{1.5}O₄ Cathodes Having Two Crystallographic Structures : *Fd-3m* and *P4₃32*] que le composé pur et stoechiométrique LiNi_{0.5}Mn₁.₅O₄, dans lequel les ions Ni et Mn sont ordonnés au sein de deux sites cristallographiques distincts (respectivement les sites *4a* et *12d* du groupe d'espace P4₃32) présente un comportement électrochimique moins bon que son homologue désordonné (Ni et Mn occupant le même site cristallographie *16d* du groupe d'espace Fd-3m) et non stoechiométrique en oxygène.

La présence d'ions Mn³⁺ dans le composé, résultant des lacunes en oxygène, est donc probablement bénéfique aux performances électrochimiques.

Il est à noter que la notion de « performances électrochimiques » regroupe plusieurs critères qui ne sont pas systématiquement obtenus de manière simultanée pour un composé donné :
- les performances en termes de densité d'énergie (capacité spécifique et potentiel) ;
- les performances en termes de puissance (aptitude à répondre à de fortes densités de courant) ; et
- les performances en termes de stabilité (capacité stable en cyclage).

Le développement actuel des accumulateurs au lithium met en évidence le besoin d'identifier de nouveaux composés servant de matériau d'électrode positive et présentant des propriétés électrochimiques, telles que définies ci-dessus, optimisées.

### EXPOSE DE L'INVENTION

Dans le cadre de l'invention, le Demandeur a obtenu des composés de structure spinelle de type oxyde mixte à base de nickel, de manganèse et de lithium, de formulation et de morphologie nouvelles, présentant les propriétés recherchées.

Ainsi, la présente invention concerne un composé de structure spinelle, de formule Li_{y}Ni_{0.5-x}Mn_{1.5+x}O_{4-δ} avec :
- 0,9 < y ≤ 1,1 ;
- 0<x≤0,1 ;
- δ > 0 ;
et de paramètre de maille compris entre 8,167 et 8,190 Å, préférentiellement compris entre 8,179 et 8,183 Å.

L'invention repose sur la mise en évidence par le Demandeur que la substitution d'une faible quantité de nickel par du manganèse constitue une alternative permettant d'obtenir des spinelles de haute tension à base de lithium, avec une partie du manganèse au degré d'oxydation +3, qui présentent des performances électrochimiques améliorées.

D'un point de vue théorique, dans ces composés, les couples redox Ne⁺/Ni³⁺, Ni³⁺/Ni²⁺ et Mn⁴⁺/Mn³⁺ sont électrochimiquement actifs de manière réversible. Il est à noter qu'il est avantageux de disposer de composés travaillant sur le couple Ni⁴⁺/Ni²⁺ puisqu'ils permettent l'insertion/extraction de deux moles d'ions lithium par mole de nickel (réaction électrochimique s'effectuant à 4,7 V vs. Li⁺/Li). Cette caractéristique permet de générer des accumulateurs de grande capacité et de forte densité d'énergie, même dans le cas d'un rapport molaire Mn/Ni inférieur à 3/1 tel qu'il existe dans LiNi_{0.5}Mn_{1.5}O₄. Malgré tout, il est intuitif qu'un rapport trop élevé est à éviter.

Ainsi, en pratique, le Demandeur a montré que les matériaux possédant les meilleurs compromis entre densité d'énergie massique pratique (potentiel et capacité pratique élevés) et stabilité en cyclages (perte de capacité par cycle minimisée) avaient une formule Li_{y}Ni_{0.5-x}Mn_{1.5+x}O_{4-δ}.

Dans cette formule :
- y est préférentiellement sensiblement égal à 1 ;
- x est également préférentiellement sensiblement égal à 0,1.

Un composé privilégié selon l'invention répond donc la formule LiNi_{0.4}Mn_{1.6}O_{4-δ}.

δ correspond à une légère déficience en oxygène, classiquement générée par la température de synthèse généralement élevée. Ce déficit est également contrôlé par les conditions de refroidissement décrite dans le cadre de la présente invention. Cette valeur est préférentiellement proche de 0. La valeur 0 est toutefois exclue.

Une autre caractéristique essentielle de ces composés réside dans leur paramètre de maille, compris entre 8,167 (x = 0 et δ=0 et 8,190 Å (x = 0,1), préférentiellement entre 8,179 et 8,183 Å.

Les composés revendiqués se distinguent de ceux de l'état antérieur de la technique par leur définition ainsi que par leurs propriétés avantageuses dans le cadre de l'invention. Ainsi, les composés de l'invention testés au sein d'accumulateurs au lithium présentent des propriétés optimisées en termes :
- de stabilité de la capacité spécifique : 130 mAh/g sous un régime de C/5 avec une perte par cycle nulle sur plus de 100 cycles, et très faible au-delà ; et
- de densité d'énergie : > 600 Wh/kg.

Le document JP-A-8 217452 concerne certes un matériau de structure spinelle et de composition LiMₓMn₂₋ₓO₄, dans laquelle x est compris entre 0 et 0,5 inclus et M est du Co, Ni, Fe ou Cr, mais avec un paramètre de maille inférieur à 8,24 Å. Ce matériau présente de bonnes propriétés en cyclage, mais sans spécification particulière, du fait de l'utilisation comme précurseur d'un oxyde de manganèse MnO₂ ayant une surface spécifique de 150 à 500 m²/g. L'application vise implicitement le domaine de potentiel 3,5 - 4,5 V vs. Li⁺/Li, non au-delà, ne prenant de ce fait pas en compte l'oxydo-réduction de l'élément M (Co, Ni, Cr, Fe) habituellement entre 4,5 et 5,0 vs. Li⁺/Li.

D'autre part, l'article de K. Takahashi *et al.* [Koh Takahashi, Motoharu Saitoh, Mitsuru Sano, Miho Fujita, and Koichi Kifune, Journal of The Electrochemical Society, 151, A173-A177 (2004)] intitulé "Electrochemical and Structural Properties of a 4.7 V-Class LiNi_{0.5}Mn_{1.5}O₄ Positive Electrode Material Prepared with a Self-Reaction Method", mentionne l'existence du composé LiNi_{0.4}Mn_{1.6}O₄, mais sans précision sur le paramètre de maille. En outre, les propriétés électrochimiques ne sont pas mises en exergue. En particulier, la capacité spécifique de ce composé, en fonction du nombre de cycles effectués, est présentée mais le cyclage est réalisé dans la fenêtre de potentiel 4,3-4,9 V vs. Li⁺/Li, excluant ainsi le couple redox Mn⁴⁻/Mn³⁺. Dans ces conditions, la capacité spécifique est, dès le premier cycle, inférieure à 110 mAh/g et donc peu favorable.

Dans le cadre de l'invention, il est par ailleurs souhaitable que le composé de l'invention ait une morphologie bien définie, à savoir une taille de particules supérieure au micron et inférieure à 20 microns, avec un mode unique localisé autour de 10 µm et une surface spécifique de l'ordre de 1 m²/g (+/- 0,5 m²/g).

Selon un autre aspect, l'invention concerne également le procédé de préparation d'un tel matériau, déficient en oxygène et contenant une faible quantité d'ions Mn³⁺ (généralement avec une impureté de type LiₓNi₁₋ₓO présente conjointement avec le matériau).

Il s'est avéré qu'un parfait contrôle des paramètres de synthèse, notamment de la température et du temps de traitement, ainsi que du type de refroidissement employé, étaient nécessaires à l'obtention du matériau de l'invention.

L'invention concerne donc le procédé de préparation desdits composés dont les étapes essentielles sont les suivantes :
- mélange de précurseurs carbonatés, préférentiellement carbonates de lithium, de nickel et de manganèse, dans les conditions stoechiométriques, éventuellement en présence d'un excès de 1 à 5% molaire de lithium ;
- soumission du mélange homogène à un premier traitement thermique, à une température comprise entre 500 et 700°C ;
- soumission dudit mélange à une ou plusieurs étapes de recuit à une température comprise entre 700 et 950°C, préférentiellement supérieure à 800°C, suivi d'un refroidissement en milieu contenant de l'oxygène.

Lors de la première étape, les précurseurs sont mélangés de façon intime par broyage mécanique en milieu liquide, pendant une durée de vingt heures dans l'hexane par exemple, puis le solvant est évaporé pour donner lieu à une poudre parfaitement homogène.

Dans la seconde étape, le traitement thermique autour de 600°C doit être entrepris afin de permettre la bonne incorporation du lithium à l'oxyde mixte de Ni et de Mn. Ce chauffage permet de décarbonater et de former le produit recherché.

Le second traitement à une température généralement supérieure à 800°C doit être effectué afin d'entraîner une perte d'oxygène, tout en créant la morphologie souhaitée.

Enfin, un refroidissement adapté au traitement précédent est effectué en milieu contenant de l'oxygène, de sorte qu'un retour d'oxygène partiel soit permis. Il doit persister une certaine quantité de manganèse au degré III correspondant à un paramètre de maille autour de 8,176 Å pour LiNi_{0.5}Mn_{1.5}O₄, par exemple.

En fonction du procédé de synthèse mis en oeuvre, une étape de désagglomération des particules en solution aqueuse et/ou de modification chimique de la surface de l'oxyde peut encore améliorer les propriétés électrochimiques du matériau d'électrode.

Ainsi, dans certains cas, deux modes de répartition des particules obtenues sont observés : typiquement l'un autour de 10 µm et l'autre autour de 100 µm. Ce dernier correspond en fait à une agglomération de particules de taille plus petite. Un traitement de la poudre en solution aqueuse peut alors être réalisé. Ce traitement s'effectue pendant une durée de quelques minutes aux ultrasons ou de 48h sous agitation magnétique, par exemple. Après séchage à une température inférieure ou égale à 400°C (pour éviter une nouvelle agglomération), on obtient une poudre contenant uniquement des particules ayant un mode localisé autour de 10 µm.

Cette désagglomération a pour principal effet de permettre une meilleure pénétration de l'électrolyte entre les particules de matière active, augmentant ainsi sensiblement la réponse en courant (capacité plus élevé pour un régime de cyclage donné).

Alternativement, la poudre non désagglomérée peut être tamisée de façon à récupérer les particules de taille inférieure à 20 µm.

Par ailleurs, en raison de la présence de nickel (élément aux propriétés catalytiques) et surtout du potentiel de fonctionnement élevé (supérieur à 4,5 V vs. Li⁺/Li), en dehors de la fenêtre de stabilité thermodynamique des solvants utilisés dans les électrolytes habituels, une modification de la surface de la poudre et des propriétés physico-chimiques peut s'avérer bénéfique pour améliorer davantage la tenue en cyclage prolongé (augmentation de la durée de vie). En effet, bien que la stabilité en cyclage soit avant tout liée à la stabilité structurale, elle dépend aussi de la surface de contact avec l'électrolyte (augmentation de la taille des particules, réduction de la surface spécifique). La morphologie et la taille des grains obtenus par le procédé de synthèse permettent en partie de limiter la réactivité vis-à-vis de l'électrolyte à haut potentiel et contribue ainsi également à limiter la perte de capacité au cours du cyclage, que ce soit à température ambiante, ou à 55°C où la réactivité est habituellement amplifiée.

En pratique, le traitement de surface consiste à utiliser une solution aqueuse contenant des ions phosphate (LiH₂PO₄ ou (NH₄)₂HPO₄ par exemple), de concentration variable, dans laquelle est placé l'oxyde mixte. Le mélange est maintenu sous agitation magnétique pendant une durée variable de quelques minutes à plusieurs dizaines de jours, préférentiellement 48 heures. Une centrifugation est réalisée à l'issue du temps prévu, suivie de plusieurs rinçages à l'eau ultra pure et à l'éthanol et d'un séchage à l'étuve à 60°C. Enfin, un traitement thermique à 350°C (+/- 25°C), d'une durée variant de 2 à 5 h, est effectué.

En raison des propriétés électrochimiques avantageuses du composé revendiqué, l'invention concerne également les électrodes, les accumulateurs qui présentent à l'électrode négative, soit du lithium métallique (type lithium-métal) soit un matériau d'insertion du lithium (type lithium-ion) comprenant comme matériau actif ledit composé, et de façon plus élaborée les batteries constituées d'accumulateurs en série.

Les électrodes, déposées sur des feuilles métalliques servant de collecteurs de courant, sont composées de préférence d'une dispersion du matériau actif avec un additif conducteur électronique (par exemple carbone) et/ou un liant organique (par exemple polyéther, polyester, polymère à base de méthacrylate de méthyle, acrylonitrile, fluorure de vinylidène) conférant ainsi une bonne conductivité et une tenue mécanique satisfaisante. Un séparateur mécanique entre les deux électrodes est imbibé d'électrolyte (conducteur ionique). Celui-ci est généralement constitué d'un sel dont le cation est au moins en partie l'ion lithium (LiClO₄, LiAsF₆, LiPF₆, LiBF₄, LiCH₃SO₃, ...) et d'un solvant polaire aprotique (éthylène ou propylène carbonate, diméthylcarbonate, diéthylcarbonate, méthyléthylcarbonate, ...).

### EXEMPLES DE REALISATION

L'invention et les avantages qui en découlent ressortiront mieux des exemples de réalisation qui suivent, à l'appui des figures annexées. Ces exemples ne sont toutefois en aucun cas limitatifs.

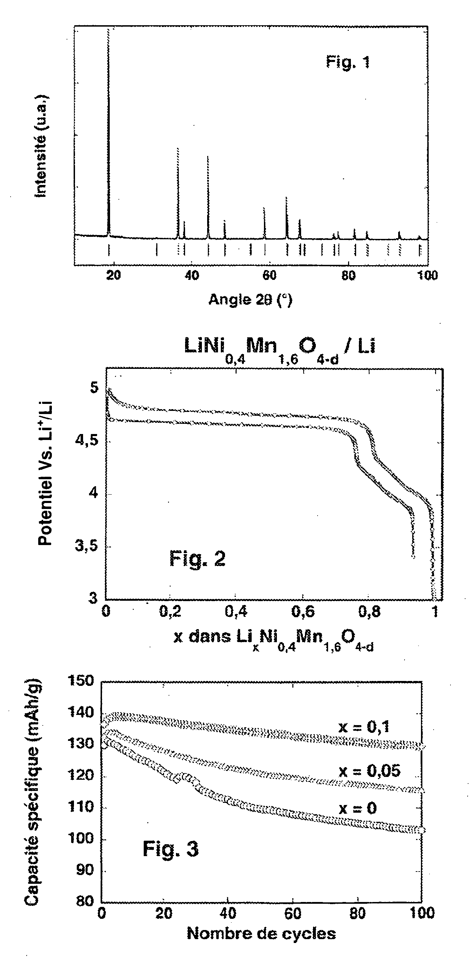

Figure 1 : La figure 1 est un graphique représentant un diagramme de diffraction des rayons X (λCuKα) d'un composé de formule LiNi_{0.4}Mn_{1.6}O_{4-δ}. Les symboles verticaux correspondant aux positions de Bragg calculées pour le groupe d'espace Fd-3m, avec un paramètre de maille de 8,179 Å.
Figure 2: La figure 2 est un graphique représentant une courbe de cyclage intentiostatique (premier cycle de charge / décharge) sur laquelle est reporté le potentiel par rapport au couple Li⁺/Li en fonction de la composition du matériau actif de l'électrode positive (LiNi₀.₄Mn)_{1.6}O_{4-δ}, avec un paramètre de maille de 8,179 Å).
Figure 3 : La figure 3 est un graphique représentant l'évolution de la capacité de décharge (exprimée en mAh/g) en fonction du nombre de cycles, pour trois matériaux de composition LiNi_{0.5-x}Mn_{1.5+x}O_{4-δ} (x=0 ; 0,05 et 0,10), à 20°C et sous un régime de C/5 entre 3,5 et 5 V vs. Li⁺/Li.

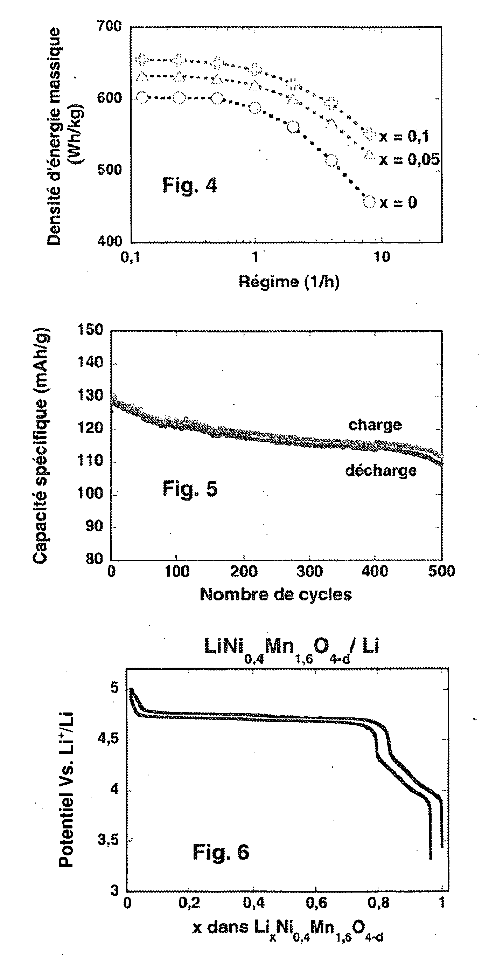

Figure 4 : La figure 4 est un graphique représentant la densité d'énergie massique en décharge (produit du potentiel et de la capacité spécifique), exprimée en Wh/kg de matière active, en fonction du régime (densité de courant), pour les trois matériaux préalablement présentés en figure 3.
Figure 5 : La figure 5 est un graphique représentant l'évolution des capacités de décharge et de charge (exprimées en mAh/g) en fonction du nombre de cycles, pour un matériau de composition LiNi_{0.4}Mn_{1.6}O_{4-δ} et de paramètre de maille de 8,179 Å, à 20°C et sous un régime de C entre 3,5 et 5 V vs. Li⁺/Li.
Figure 6 : La figure 6 est un graphique représentant une courbe de cyclage intentiostatique (dixième cycle de charge/décharge) sur laquelle est reporté le potentiel par rapport au couple Li⁺/Li en fonction de la composition du matériau actif de l'électrode positive (LiNi_{0.4}Mn_{1.6}O_{4-δ}, avec un paramètre de maille de 8,179 Å).

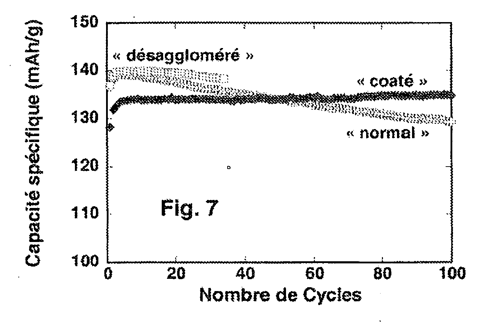

Figure 7 : La figure 7 est un graphique représentant l'évolution de la capacité de décharge (exprimée en mAh/g) en fonction du nombre de cycles, pour un matériau de composition LiNi_{0.4}Mn_{1.6}O_{4-δ}, et de paramètre de maille égal à 8,179 Å, à 20°C et sous un régime de C/5 entre 3,5 et 5 V vs. Li⁺/Li. Ce matériau est traité de différentes façons, respectivement selon le procédé de base de l'invention (mode dit « normal »), ayant subi une étape de désagglomération (mode dit « désaggloméré »), et après traitement de surface (mode dit « coaté »).

### Exemple 1

Un mélange intime de précurseurs à base de carbonates (8,168 g de carbonate de nickel, 6,261 g de carbonate de lithium et 30,641 g de carbonate de manganèse) dans les conditions stoechiométriques, avec un excès de 3% molaire en Li, est réalisé par broyage au broyeur planétaire de type Retsch dans un bol de 250 ml contenant 13 à 15 billes de 20 mm de diamètre et de 10,8 g chacune, durant 20 heures (4 fois 5 h) à 500 tr/min, en présence d'hexane (poudre submergée). Un séchage d'une nuit à 55°C est réalisé sur le mélange qui est ensuite traité à 600°C (10h), puis à 900°C (15h) suivi d'un refroidissement à température ambiante à la vitesse de 1°/min. Le composé obtenu possède les caractéristiques de l'invention et a un paramètre de maille de 8,179 Å.

Les figures 1 à 7 illustrent les propriétés de l'échantillon obtenu conformément à cet exemple 1.

### Exemple 2

Un mélange intime de précurseurs à base de carbonates (8,168 g de carbonate de nickel, 6,261 g de carbonate de lithium et 30,641 g de carbonate de manganèse) dans les conditions stoechiométriques, avec un excès de 3% molaire en Li, est réalisé par broyage au broyeur planétaire de type Retsch dans un bol de 250 ml contenant 13 à 15 billes de 20 mm de diamètre et de 10,8 g chacune, durant 20 heures (4 fois 5 h) à 500 tr/min, en présence d'hexane (poudre submergée). Un séchage d'une nuit à 55°C est réalisé sur le mélange qui en ensuite traité à 600°C (10h), puis à 920°C (15h) suivi d'un refroidissement à température ambiante à la vitesse de 5°/min. Le composé obtenu possède les caractéristiques de l'invention et a un paramètre de maille de 8,1827 Å.

### Exemple 3

Un mélange intime de précurseurs à base de nitrates (22,076 g de nitrate de manganèse, 3,895 g de nitrate de lithium et 6,491 de carbonate de nickel) dans les conditions stoechiométriques, avec un excès de 3% molaire en Li et 2g d'eau, est réalisé par traitement thermique à 600°C (montée à 0,1°/min entre 30°C et 300°C, puis pallier de 3 h à 300°C, puis montée à 0,2°/min entre 300 et 600°C, puis pallier de 15 h à 600°C, puis refroidissement jusqu'à température ambiante à une vitesse de 5°/min) puis à 900°C (24 h), suivi d'un refroidissement à température ambiante à la vitesse de 3°/min. Le composé obtenu possède les caractéristiques de l'invention et a un paramètre de maille de 8,1807 Å.

### Exemple de désagglomération no.1

Une étape de désagglomération des particules en solution aqueuse d'un échantillon préparé selon l'exemple 1, et présentant deux modes de répartitions : l'un autour de 10 µm et l'autre autour de 100 µm. Ce dernier correspond à une agglomération de particules plus petites. Un traitement de la poudre en solution aqueuse est alors réalisé. Ce traitement a lieu à température ambiante, pendant 10 minutes aux ultrasons. Après séchage sous une température inférieure ou égale à 400°C (pour éviter une nouvelle agglomération), on obtient une poudre contenant uniquement des particules avec un mode localisé autour de 10 µm. On note (figure 7) que cette désagglomération peut permettre une meilleure imprégnation de l'électrolyte lors du test électrochimique, tel que décrit en exemple 4. Cela a pour effet une augmentation sensible de la réponse en courant (capacité plus élevée pour un régime de cyclage donné). Le composé obtenu possède toujours les caractéristiques de l'invention.

### Exemple de désagglomération no. 2

Une étape de désagglomération des particules en solution aqueuse d'un échantillon préparé selon l'exemple 1, et présentant deux modes de répartitions : l'un autour de 10 µm et l'autre autour de 100 µm. Un traitement de la poudre en solution aqueuse est alors réalisé. Ce traitement a lieu à température ambiante, pendant une durée de 48 h sous agitation magnétique dans un bécher. Après séchage sous une température inférieure ou égale à 400°C (pour éviter une nouvelle agglomération), on obtient une poudre contenant uniquement des particules avec un mode localisé autour de 10 µm. Le composé obtenu possède les caractéristiques de l'invention.

### Exemple de désagglomération no. 3

Une étape de désagglomération des particules par tamisage mécanique successif d'un échantillon préparé selon l'exemple 1 et présentant deux modes de répartitions : l'un autour de 10 µm et l'autre autour de 100 µm. Les particules de taille inférieure à 20 µm sont récupérées. Le composé obtenu possède les caractéristiques de l'invention.

### Exemple de modification de surface

Une étape de modification de la nature chimique de la surface du matériau préparé selon l'exemple 1 est réalisée sur 10 g de LiNi_{0.4}Mn₁.₆O_{4-δ}. Ce dernier est plongé dans 250 ml d'une solution aqueuse contenant 0,18 mol/l de LiH₂PO₄, et placé sous agitation magnétique pendant 48 h à température ambiante. Après centrifugation et rinçages successifs à l'eau, puis à l'éthanol, un séchage de 12 h à 55°C est réalisé. Un traitement thermique à 350°C pendant 3 heures est enfin effectué. Le composé obtenu possède également les caractéristiques de l'invention. De plus, une meilleure stabilité en cyclage est observée (augmentation de la durée de vie de la batterie) lors du test électrochimique tel que décrit en exemple 4 (figure 7 : courbe dite « coatée »).

### Exemple 4

Une batterie de type "pile bouton" construite avec une électrode négative constituée :
- d'un disque de lithium (16 mm de diamètre, 130 µm d'épaisseur) déposé sur un disque de nickel servant de collecteur de courant,
- d'une électrode positive constituée d'un disque de 14 mm de diamètre prélevée sur un film composite de 50 µm d'épaisseur comprenant le matériau de l'invention préparé selon l'exemple de désagglomération no. 1 (80% en masse), de noir de carbone (10% en masse) en guise de matériau conducteur et de l'hexafluorure de polyvinylidène (10% en masse) en guise de liant, le tout étant déposé sur un collecteur de courant en aluminium (feuille de 20 µm d'épaisseur),
- d'un séparateur imbibé d'un électrolyte liquide à base du sel LiPF₆ (1 mol/L) en solution dans un mélange de carbonate de propylène, carbonate d'éthylène et de carbonate de diméthyle.

A 20°C, sous un régime de C/5, ce système délivre une capacité de 140 mAh/g, soit plus de 640 Wh/kg de matériau actif. A cette même température, sous un régime de C, ce système délivre une capacité relativement stable (de 130 à 110 mAh/g de matériau actif) pendant plus de 500 cycles, correspondant à une perte par cycle inférieure à 0,025 %.

### Exemple 5

Une batterie de type "pile bouton" construite avec une électrode négative constituée :
- d'un disque de lithium (16 mm de diamètre, 130 µm d'épaisseur) déposé sur un disque de nickel servant de collecteur de courant,
- d'une électrode positive constituée d'un disque de 14 mm de diamètre prélevée sur un film composite de 50 µm d'épaisseur comprenant le matériau de l'invention préparé selon l'exemple de modification de surface (80% en masse), de noir de carbone (10% en masse) en guise de liant, le tout étant déposé sur un collecteur de courant en aluminium (feuille de 20 µm d'épaisseur),
- d'un séparateur imbibé d'un électrolyte liquide à base du sel LiPF₆ (1 mol/L) en solution dans un mélange de carbonate de propylène, carbonate d'éthylène et de carbonate de diméthyle.

A 20°C, sous un régime de C/5, ce système délivre une capacité supérieure à 130 mAh/g de matériau actif sans perte de performances pendant plus de 100 cycles.

### Exemple 6

Un accumulateur Li-ion (prototype bobiné avec électrodes double-face) de 2Ah, constitué d'électrodes épaisses du matériau de l'invention (électrode positive) et du graphite (électrode négative) est réalisé en emballage souple. Un tel accumulateur est capable de délivrer environ 240 Wh/kg (densité d'énergie globale de la batterie ; directement comparable aux 160-180 Wh/kg des batteries commerciales LiCoO₂/Graphite) dans des conditions d'utilisation pratiques (régime de cyclage équivalent à C/5 par exemple).

Les protocoles de synthèse décrits ci-dessus ont été adoptés pour synthétiser plusieurs échantillons de composition LiyNi_{0.5-x}Mn_{1.5+x}O_{4-δ}.

La figure 1 montre le diagramme de diffraction des rayons X d'un échantillon LiNi₀.₄Mn_{1.6}O_{4-δ} de paramètre de maille égal à 8,179 Å, obtenu, comme déjà dit, selon le protocole décrit en relation avec l'exemple 1.

LiNi_{0.4}Mn_{1.6}O_{4-δ} de paramètre de maille égal à 8,179 Å, présente une capacité spécifique théorique de 147 mAh/g à un potentiel moyen de 4,6 V vs. Li⁺/Li, soit une densité théorique de 675,6Wh/g de matière active. Au cours de l'extraction de lithium (charge de la batterie) depuis le composé initial, les ions Mn³⁺ sont oxydés en Mn⁴⁺ (≈20% de la capacité), et les ions Ni²⁺ sont oxydés en Ni⁴⁺ (≈80% de la capacité), comme le montre la figure 2.

La capacité spécifique en fonction du nombre de cycles effectués pour trois composés de formulation Li_{y}Ni_{0.5-x}Mn_{1.5+x}O_{4-δ} est reportée sur la figure 3. On s'aperçoit immédiatement que LiNi_{0.4}Mn_{1.6}O_{4-δ} (soit x = 0,1) possède une meilleure cyclabilité (capacité plus élevée pour un nombre de cycles effectués donné) que LiNi_{0.45}Mn_{1.55}O_{4-δ} (soit x = 0,05). De même, LiNi_{0.4}Mn_{1.6}O_{4-δ} présente un meilleur comportement en puissance (figure 4).

Il est à noter que la variation de la densité d'énergie massique est principalement le fait de la diminution du potentiel moyen sous fortes densités de courant. La capacité spécifique n'est en revanche que peu affectée par une augmentation de la densité de courant. Par exemple, la capacité spécifique en décharge est proche de 143 mAh/g à C/8 (>97% de la valeur théorique) et atteint, après une charge à C/8, 133 mAh/g à 8C (>90% de la valeur théorique). Le rendement faradique, correspondant au rapport de la capacité de charge sur la capacité de décharge est de plus très élevé (>97% à C/8, >99% à C, par exemple), comme le montre par ailleurs la figure 5. La polarisation (ou résistance interne), faible au premier cycle de charge/décharge, diminue au cours des 2-3 cycles suivants, et demeure très faible jusqu'à la fin de vie de la batterie (c'est-à-dire après plusieurs centaines ou plusieurs milliers de cycles). Par exemple, à C/5, la différence de potentiel entre la courbe de charge et la courbe de décharge est de moins de 40 mV au dixième cycle du système LiNi_{0.4}Mn_{1.6}O_{4-δ}/ Li (figure 6).

La figure 7 montre qu'une étape de désagglomération des particules en solution aqueuse ou de modification chimique de la surface de l'oxyde améliore encore les propriétés électrochimiques du matériau d'électrode selon l'invention.

## Revendications

1. Composé de structure spinelle, ***caractérisé* :**
• **en ce qu'**il répond à la formule Li_{y}Ni_{0.5-x}Mn_{1.5+x}O_{4-δ} avec :
- 0,9<y≤1,1 ;
- 0<x≤0,1 ;
- δ > 0
• et **en ce qu'**il présente un paramètre de maille compris entre 8,167 et 8,190 Å, préférentiellement compris entre 8,179 et 8,183 Å.

2. Composé selon la revendication 1, ***caractérisé* en ce qu'**il répond à la formule LiNi_{0.4}Mn_{1.6}O_{4-δ}.

3. Composé selon la revendication 1 ou 2, ***caractérisé* en ce qu'**il possède une taille de particules uniforme, supérieure au micromètre, préférentiellement de l'ordre de 10 µm.

4. Composé selon l'une des revendications précédentes, ***caractérisé* en ce qu'**il présente une surface spécifique comprise entre 0,5 et 1,5 m²/g.

5. Procédé de préparation d'un composé selon l'une des revendications 1 à 4 comprenant les étapes suivantes :
- mélange de précurseurs carbonatés, préférentiellement carbonates de lithium, de nickel et de manganèse, dans les conditions stoechiométriques, éventuellement en présence d'un excès de 1 à 5% molaire de lithium ;
- soumission du mélange homogène à un premier traitement thermique, à une température comprise entre 500 et 700°C ;
- soumission dudit mélange à une ou plusieurs étapes de recuits à une température comprise entre 700 et 950°C, préférentiellement supérieure à 800°C, suivi d'un refroidissement en milieu contenant de l'oxygène.

6. Procédé de préparation d'un composé selon la revendication 5, ***caractérisé* en ce que** les particules obtenues subissent une étape de désagglomération par tamisage et/ou par traitement en solution aqueuse, suivi d'un séchage.

7. Procédé de préparation d'un composé selon la revendication 5 ou 6, ***caractérisé* en ce qu'**une modification de la nature chimique de la surface du composé est réalisée par traitement aux ions phosphates.

8. Electrode comprenant comme matériau électrochimiquement actif un composé selon l'une des revendications 1 à 4.

9. Electrode selon la revendication 8, ***caractérisée* en ce que** le composé se présente sous la forme dispersée et mélangée à un additif conducteur électronique et/ou un liant organique.

10. Accumulateur comprenant au moins une première électrode selon la revendication 8 ou 9, ainsi qu'une deuxième électrode réalisée en un matériau apte à recevoir des ions lithium, lesdites électrodes étant séparées par un séparateur imbibé d'électrolyte.

11. Batterie comprenant au moins un accumulateur selon la revendication 10.

## Claims

1. A spinel structure compound, ***characterised:***
• **in that** it has the formula Li_{y}Ni_{0.5}-Mn_{1.5+x}O_{4-δ} where:
- 0.9<y≤1.1;
- 0 < x ≤ 0, 1 ;
- δ > 0
• and **in that** it has a lattice parameter of 8.167 to 8.190 Å, preferably from 8.179 to 8.183 Å.

2. A compound as claimed in claim 1, ***characterised* in that** it has the formula LiNi_{0.4}Mn₁.₆O_{4-δ}.

3. A compound as claimed in claim 1 or 2, ***characterised* in that** it has a uniform particle size in excess of 1 µm and preferably of the order of 10 µm.

4. A compound as claimed in any of the above claims, ***characterised* in that** it has a specific surface of 0.5 to 1.5 m²/g.

5. A method of preparing a compound as claimed in any of claims 1 to 4 consisting of the following stages:
- mixing carbonated precursors, preferably lithium, nickel and manganese carbonates, under stoichiometric conditions, possibly in the presence of a 1 to 5 mol per cent excess of lithium;
- subjecting this homogeneous mixture to a first heat treatment at a temperature of 500 to 700 °C;
- subjecting said mixture to one or more annealing stages at a temperature of 700 to 950 °C, preferably above 800 °C, followed by cooling in a medium containing oxygen.

6. A method of preparing a compound as claimed in claim 5, ***characterised* in that** the particles obtained are subjected to a stage to disperse them by screening and/or by treatment in an aqueous solution followed by drying.

7. A method of preparing a compound as claimed in claim 5 or 6, ***characterised* in that** the chemical nature of the surface of the compound is modified by treatment with phosphate ions.

8. An electrode comprising a compound as claimed in any of claims 1 to 4 as its electrochemically active material.

9. An electrode as claimed in claim 8, ***characterised* in that** the compound is in dispersed form and mixed with an electronically conductive additive and/or an organic binder.

10. A battery comprising at least a first electrode as claimed in claim 8 or 9 as well as a second electrode made of a material capable of receiving lithium ions, said electrodes being separated by a separator imbibed with electrolyte.

11. A set of batteries comprising at least one battery as claimed in claim 10.

## Patentansprüche

1. Verbindung mit Spinellstruktur, **dadurch gekennzeichnet:**
• **dass** sie der Formel LiyNi_{0.5-x}Mn_{1.5+x}O_{4-δ} entspricht, worin:
- 0,9 < y ≤ 1,1;
- 0 < x ≤ 0, 1;
- δ > 0,
• und **dass** sie einen Gitterparameter zwischen 8,167 und 8,190 Å, vorzugsweise zwischen 8,179 und 8,183 Å aufweist.

2. Verbindung nach Anspruch 1, **dadurch gekennzeichnet, dass** sie der Formel LiNi_{0.4}Mn_{1.6}O_{4-δ} entspricht.

3. Verbindung nach Anspruch 1 oder 2, **dadurch gekennzeichnet, dass** sie eine gleichförmige Teilchengröße von mehr als einem Mikrometer, vorzugsweise von etwa 10 µm aufweist.

4. Verbindung nach einem der vorhergehenden Ansprüche, **dadurch gekennzeichnet, dass** sie eine spezifische Oberfläche zwischen 0,5 und 1,5 m²/g aufweist.

5. Verfahren zur Herstellung einer Verbindung nach einem der Ansprüche 1 bis 4, umfassend die folgenden Schritte:
- Mischen von Vorstufen von Carbonaten, vorzugsweise von Lithium-, Nickel- und Mangancarbonaten, unter den stöchiometrischen Bedingungen, gegebenenfalls in Gegenwart eines Überschusses von 1 bis 5 Mol-% Lithium;
- Durchführung einer ersten Wärmebehandlung der homogenen Mischung bei einer Temperatur zwischen 500 und 700°C;
- Durchführung eines oder mehrerer Schritte des Glühens der Mischung bei einer Temperatur zwischen 700 und 950°C, vorzugsweise über 800 °C, worauf eine Abkühlung in einem sauerstoffhaltigen Medium folgt.

6. Verfahren zur Herstellung einer Verbindung nach Anspruch 5, **dadurch gekennzeichnet, dass** die erhaltenen Teilchen einem Schritt der Deagglommerierung durch Sieben und/oder durch Behandlung in wässriger Lösung unterzogen werden, worauf eine Trocknung folgt.

7. Verfahren zur Herstellung einer Verbindung nach Anspruch 5 oder 6, **dadurch gekennzeichnet, dass** eine Modifizierung der chemischen Natur der Oberfläche der Verbindung durch Behandlung mit Phosphationen vorgenommen wird.

8. Elektrode, umfassend als elektrochemisch aktiven Werkstoff eine Verbindung nach einem der Ansprüche 1 bis 4.

9. Elektrode nach Anspruch 8, **dadurch gekennzeichnet, dass** die Verbindung in der mit einem elektronisch leitenden Zusatz und/oder einem organischen Bindemittel dispergierten oder gemischten Form vorliegt.

10. Akkumulator, umfassend mindestens eine erste Elektrode nach Anspruch 8 oder 9 sowie eine zweite Elektrode, die aus einem Werkstoff hergestellt ist, der Lithiumionen aufnehmen kann, wobei die Elektroden durch einen mit Elektrolyt getränkten Separator getrennt sind.

11. Batterie, umfassend mindestens einen Akkumulator nach Anspruch 10.
